# EUROPEAN PATENT APPLICATION

(11) **EP 2 147 963 A2**
(43) Date of publication of application: **27.01.2010**
(21) Application number: 08737815.4
(22) Date of filing: 11.04.2008
(51) Int. Cl.: C10B 49/10, C10B 53/07, B01J 8/24, B09B 3/00, C09C 1/48

(54) **METHOD FOR TREATING TYRES AND PYROLYSIS REACTOR FOR CARRYING OUT SAID METHOD**

(30) Priority: 12.04.2007 ES 200700974
(71) Applicant: Energy & Environment Consulting, S. L., 03001 Alicante (ES); Universidad Del Pais Vasco-Euskal Herriko Unibertsitatea, 48940 Leioa (Bizkaia) (ES)
(72) Inventor: AGUADO ZARRAGA, Roberto, E-48940 Leioa (ES); OLAZAR AURRECOECHEA, Martin, E-48940 Leioa (ES); BILBAO ELORRIAGA, Javier, E-48940 Leioa (ES); MARTINEZ CAMUS, Jose Leandro, E-03001 Alicante (ES)
(74) Representative: Ponti Sales, Adelaida
(86) International application number: PCT/IB2008/051390
(87) International publication number: WO 2008/126042

(57) **Abstract**

The method includes the stage of carrying out pyrolysis of the rubber and carbon black waste that said tyres contain, and the stage of recovering said carbon black from pyrolysis of the waste, and is **characterised in that** said pyrolysis is carried out in the presence of a cracking catalyst and under conditions suitable to permit total conversion of the rubber that said waste contains to gas, in reactor conditions (1), and in that it further includes the stage of recovering said gas for use as energy and/or materials. The reactor is **characterised in that** it includes the contact system denominated spouted bed, which permits said carbon black to be separated from the bed without need to remove the catalyst.

## Description

The present invention relates to a process for the treatment of tyres and to a pyrolysis reactor for carrying out said process.

### BACKGROUND OF THE INVENTION

Used tyres constitute waste to be recycled that has as main components metallic and textile fibres, natural and synthetic rubber and carbon black.

The metallic and textile fibres that tyres contain can be recycled relatively easily. Recycling of the rubber and the carbon black, however, is at present very complex and not very viable economically, so that in practice said components constitute waste that ends up being managed by depositing it in landfill sites.

French patent FR2446312 and United States patent US4647443 describe tyre recycling methods that aim at recovery of the carbon black and utilisation of the rubber that tyres contain for energy.

The processes of both patents carry out pyrolysis of the tyres under conditions that give rise, in reactor conditions, to a vapour phase and a solid phase or tar. In the aforesaid patents, both the tar and the vapour are processed, following the pyrolysis, to obtain carbon black and hydrocarbons.

The processes described have the disadvantage of being very complex and not very efficient from the energy and material viewpoints.

### DESCRIPTION OF THE INVENTION

The objective of the present invention is to resolve the disadvantages mentioned by developing a process and reactor for the treatment of tyres that is very simple and highly efficient from the energy and material viewpoints.

In accordance with a first aspect, the present invention provides a process for the treatment of tyres, which includes the stage of carrying out pyrolysis of the rubber and carbon black waste that said tyres contain, and the stage of recovering said carbon black from pyrolysis of the waste. The process is **characterised in that** said pyrolysis is carried out in the presence of a cracking catalyst and under conditions suitable to permit total conversion to gas, in reactor conditions, of the rubber that said waste includes, and in that it further includes the stage of recovering said gas for use as energy and/or materials.

Surprisingly, the process of the present invention has the advantage that it permits simple and very efficient recovery of all the carbon black in the tyres, since all the rubber of the waste is converted to gas that can be put to use, either for producing energy or materials, thereby generating no tars that must subsequently be treated. The carbon black can thus be separated for recovery thereof in the pyrolysis reactor itself, without need to carry out subsequent treatments, while the gas obtained can be recovered easily in order to make use of it.

Preferably, the pyrolysis of the process of the present invention is carried out by means of the contact system denominated spouted bed.

Spouted-bed contact system shall be taken to mean the contact system that basically consists in placing the solid to be treated (rubber and carbon black) on a bed through the base of which there passes the carrying gas and in using, instead of the classic distributor plate characteristic of fluidised beds, an orifice through which the gas passes, by opening a channel through which it ascends. Thus, the solid to be treated, which can be fed through the upper part, circulates by covering a cycle composed of a descending phase in the annular zone of the bed that surrounds the aforesaid channel, and an ascending phase in the zone of the channel, driven by the gas.

The spouted-bed contact system applied to the pyrolysis process of the method described offers many advantages. The most surprising thereof lies in the fact that it allows the carbon black to be separated easily from the bed, without need to take out the catalyst. Indeed, the spouted-bed system enables the particles to be separated in function of their density or size, since the particles of lower density, such as the carbon black, describe broader trajectories in the fountain, and can thus be collected by fitting an element such as an inclined channel in the wall of the pyrolysis reactor.

Another advantage of the spouted-bed system is that it enables continuous operation of the reactor, so that it is not necessary to halt the operation in order to load in the solid to be treated and discharge the catalyst.

The spouted-bed system moreover presents other advantages. Among them is the fact that it permits efficacious treatment of solids of irregular texture and with a tendency towards agglomeration, characteristics which are common to granular materials (for example, waste materials of the plastic type), since the high-speed action in said system breaks the agglomerates. It is likewise possible to process particles of larger size than those processed in the fluidised bed systems.

According to a preferred embodiment of the present invention, said cracking catalyst is selected for obtaining hydrocarbons, while the energy-use of the recovered gas includes the stage of generating electrical energy by means of cogeneration equipment substantially fed from hydrocarbons from said gas.

Thanks to these characteristics, the process of the present invention has the advantage of having very high energy efficiency and being very economically viable, since all the rubber of the waste is converted into a fuel (mostly liquid) ready for use in cogeneration equipment that produces electrical energy and thermal energy.

In the present invention, cogeneration equipment, and preferably thermoelectric cogeneration equipment, shall be taken to mean any equipment or system that can simultaneously generate and use electricity and heat from a liquid or gaseous fuel, either by means of equipment that uses alternating motors, gas turbines, steam turbines and/or fuel cells. The "in situ" use of the thermal energy permits very high overall energy outputs.

Preferably, said pyrolysis is carried out at atmospheric pressure.

Advantageously, said catalyst is selected for providing hydrocarbons of suitable molecular size for use as fuel in said cogeneration equipment and, preferably, the molecular size of said hydrocarbons is such that the molecules have fewer than 25 atoms of carbon.

Again advantageously, said catalyst includes zeolites with good properties for cracking.

Preferably, the process includes the stage of recovering the carbon dioxide from the combustion gases of said cogeneration equipment and, advantageously, said recovery is carried out by means of a chemical absorption and extraction system.

Thanks to these characteristics, the economic efficiency and the energy and materials efficiency of the process of the present invention is higher still, since liquid carbon dioxide is also obtained, useful for employing as a raw material in various industrial processes.

Advantageously, the process includes the stage of recirculating part of the gas generated in pyrolysis for fluidising the bed and for providing heat, with the temperature of said recirculated gas being maintained by thermal energy from post-combustion of the exhaust gases from said cogeneration equipment. Thanks to this, the pyrolysis operation can be maintained autothermally without need for an external heat source, so that the process can be self-sufficient.

Again advantageously, the process includes the stage of cooling the gas generated under reactor conditions in order to obtain the hydrocarbons that feed said cogeneration equipment, and said cooling is carried out by means of absorption cooling equipment that uses thermal energy, preferably hot water, from the cogeneration equipment itself.

Again advantageously, before proceeding to the stage of pyrolysis, the stage of separating the textile and metallic fibres from the tyres is carried out.

Preferably, the rubber and carbon black waste that remains from the tyres, once the textile and metallic fibres have been removed, is comminuted before proceeding to pyrolysis thereof.

Again preferably, the process includes the stage of utilising thermal energy proceeding from said cogeneration equipment in order to meet the thermal needs of at least one parallel process of treatment of wastes or products.

Advantageously, said parallel process includes the stage of desalinising brine by means of a system of desalinisation by thermal evaporation. The process thus presents the advantage that, in addition to electrical energy, it can generate drinking water of excellent quality.

In accordance with a second aspect, the present invention provides a pyrolysis reactor for carrying out the process claimed. Said reactor is **characterised in that** it includes means for collecting the carbon black from pyrolysis of the waste, and in that it also includes the contact system known as the spouted-bed system, which allows the carbon black to be separated from the bed without need to remove the catalyst.

Thanks to these characteristics, the invention surprisingly provides a reactor that permits very simple recovery of the carbon black from the tyres.

As observed, the spouted-bed system enables the particles to be separated in function of their density or size, since the particles of lower density, such as the carbon black, describe broader trajectories in the fountain.

According to a preferred embodiment, said reactor includes a wall with an inverted-cone configuration, with the lower part of said wall including the inlet of gas for moving the bed. Said configuration improves the efficiency of the pyrolysis operation, permits an increased period of operational gas flow, work with wider distributions of particle sizes and treatment of a larger flow of rubber for a given volume. Moreover, thanks to the aforesaid configuration, less temperature is required for carrying out the catalytic pyrolysis and, as a consequence of all this, the energy needs of the process are greatly reduced.

Advantageously, said reactor of inverted-cone configuration includes an upper prolongation of the same section as the conical zone and having the function of collecting the solids borne by the gas that emerges from the centre of the bed.

Again advantageously, the zone of the pyrolysis reactor occupied by the cracking catalyst and forming the bed includes a central device that consists of two rings, one of which is located in the upper zone of the conical chamber and the other on the upper cylindrical prolongation. Said device permits the treatment of materials with narrow granular distributions (little variation of particle diameters) and very heterogeneous mixtures, that is, it permits the pyrolysation in a single operation of granulometric fractions of different sizes.

Preferably, the wall of said reactor includes said means for collecting the separated carbon black. Thus the particles of carbon black, which are the ones that describe the broadest trajectories, are easily collected in the means provided on the wall.

Again preferably, said means for collecting the carbon black include means for permitting the continuous outlet of the separated carbon black. The recovery is thus very efficient and viable.

Advantageously, said reactor includes means for hot filtering the gases generated in reactor conditions. This avoids bearing away of the carbon black and, therefore, contamination of the pyrolysis gases.

### BRIEF DESCRIPTION OF THE DRAWINGS

For a better understanding of all that has been outlined a drawing has been attached that shows, schematically and solely by way of example, a practical case of embodiment of the pyrolysis reactor with which said process can be carried out.

### DESCRIPTION OF A PREFERRED EMBODIMENT

The tyres that lend themselves to be treated in the process of the present invention will preferably be used tyres, supplied by waste management companies.

There follows a description of a preferred embodiment of the process in which the pyrolysis operation is carried out on tyres from which the textile and metallic fibres they contain have previously been removed. In this embodiment, the rubber and carbon black waste from the tyres is treated in a pyrolysis reactor 1 that includes the spouted-bed contact system, and all the gas from the pyrolysis is made energy use of for fuel in cogeneration equipment that produces electrical energy and thermal energy.

In an initial stage, the rubber and carbon black waste is comminuted in order to achieve a granular material that is homogeneous in composition and granulometry and suitable for feeding to the reactor 1 or pyrolysis reactor. Although the particle size depends on the geometry of the reactor 1, the spouted-bed technology proposed in this embodiment allows work with particle sizes larger than those of other types of reactors, which means an energy saving in this stage that has an effect on the final efficiency final of the process.

Once comminuted, the rubber and carbon black waste is fed into the reactor 1 through the side opening 2 for carrying out low-temperature pyrolysis thereof in the presence of a cracking catalyst.

The type of catalyst and the conditions under which the pyrolysis is carried out are those suitable for permitting total conversion to gas, in reactor conditions, of the rubber from the tyres, so that no tars and/or heavy hydrocarbons are generated in the process of the present invention.

In the embodiment described, the catalyst particles bed that is placed inside the reactor 1 is prepared from zeolites with good properties for cracking (HZSM5, β, HY), and with a particle diameter that depends on the specific geometry of said reactor 1.

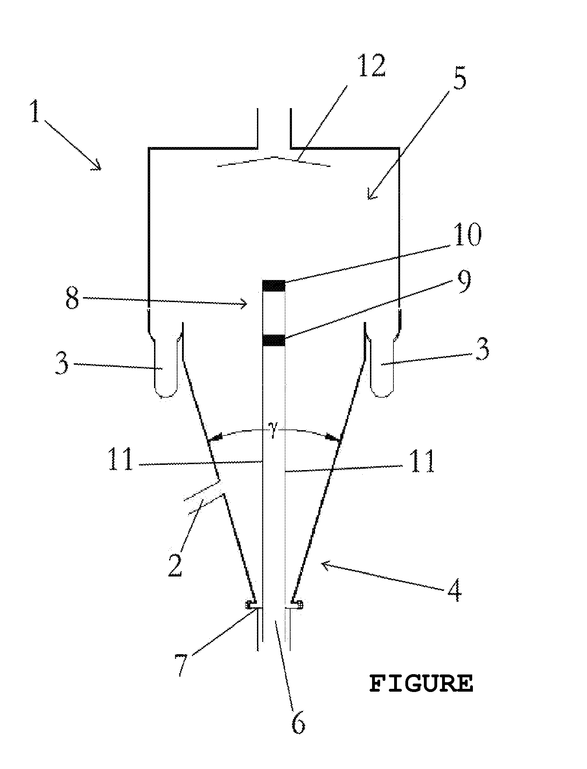

As noted in the description of the invention, the spouted-bed technology is based on the creation of a central channel or jet of gas that forces the particles to describe cycles, preventing dead zones (without circulation of material). Surprisingly, this technology applied to the process of the present invention presents the advantage of allowing the carbon black to be separated easily from the bed, without need to remove the catalyst. This is due to the fact that the movement of the particles varies in function of their density. Thus, particles of lower density, such as carbon black, describe broader trajectories in the fountain, which means they can be distinguished and separated from the rest by, for example, providing a channel 3 in the wall of the reactor 1 or pyrolysis reactor, as can be seen in the attached figure.

Moreover, thanks to the fact that the spouted-bed system permits continuous operation of the reactor, the channel 3 can be designed by way of overflow in order to permit the continuous outlet of the carbon black.

As the same figure shows, the pyrolysis reactor 1 with which the embodiment of the process described is implemented, presents an inverted-cone configuration 4 with a cylindrical upper prolongation 5 for the purpose of collecting the solids carried by the gas that emerges from the centre of the bed.

The trunco-conical section 4 of the reactor 1 has very particular gas inlet 6 dimensions and design that allow the achievement of maximum efficiency of gas-solid contact, minimum loss of charge and uniformity of the solids to be treated.

Accordingly, provision has been made for the angle of inclination y corresponding to the inverted-cone part 4 of the reactor 1 to be between 28° and 50°; and for the ratio between the diameter of the gas inlet 6 and the diameter of the base 7 of the trunco-conical part 4 to be between 1/2 and 5/6. Provision has also been made for the flow of gas at the inlet 6 to be between 1.5 and 2 times greater than that pertaining to the predetermined minimum speed, depending on the specific properties of the material that makes up the bed and the geometrical factors of the reactor 1 itself.

As regards the size of the particles that form the bed, it has been found that the ratio between the diameter of the gas inlet 6 to the reactor 1 and the diameter of said particles must preferably be between 2 and 30. Where the ratio between the diameter of the inlet 6 and the particle diameter is greater than 30 then the use of a central device 8 is required to guide the inlet gas up to the surface of the bed and open the central jet required for the cyclical movement. This device 8 consists of two rings 9,10 of the same diameter as the inlet 6 of the pyrolysis chamber 1. One of them is flush with the upper part of the cone 4 and the other is above the cone 4. Both 9,10 are secured by means of three ribs 11 to the base 7 of the chamber or reactor 1. The purpose of the lower ring 9 is to achieve opening of the central channel and consequent stability of the bed. The upper ring 10 prevents the height of the fountain rising too high, a situation that occurs when the particles are light or small. Furthermore, the bearing away of the fine materials is prevented by placing a baffle 12 in the upper part of the cylindrical section 5.

The central device 8 described in the preceding paragraph has the advantage of permitting treatment both of materials with narrow granular distributions (little variation of particle diameters) and very heterogeneous mixtures, thereby allowing pyrolysation in a single operation of granulometric fractions of different sizes.

Surprisingly, the process proposed in the present invention enables, on the one hand, complete conversion of all the rubber in the tyres to gas and, on the other, continuous removal of the carbon black from the pyrolysis reactor through the channel/overflow 3.

In the embodiment described, upon outlet from the reactor 1 all the pyrolysis gas is recovered and cooled to produce hydrocarbons (mostly in liquid phase) that can be used in the cogeneration equipment for the production of electrical energy, following purification. All the rubber from the tyres is thus made use of for energy production via the cogeneration system.

In order to optimise said energy-production utilisation the cracking catalyst to be employed is selected in order to produce hydrocarbons and, preferably, hydrocarbons of a molecular size such that the molecules have fewer than 25 atoms of carbon.

Two types of equipment are preferably used to carry out the thermoelectrical cogeneration, one using hydrocarbons in gas state and the other hydrocarbons in liquid state. Such equipment can carry out cogeneration either via the system of alternating internal combustion motors or by the combined-cycle system that uses gas and steam turbines and a boiler. Indeed, any system capable of generating electricity and thermal energy from a fuel can be suitable.

In the embodiment described, part of the pyrolysis gas produced is recirculated to the pyrolysis reactor 1 for moving the bed and providing heat. The thermal energy to maintain the temperature level of the recirculated pyrolysis gases is obtained from post-combustion of the exhaust gases from the cogeneration equipment, since it is known that the temperature of said gases (smoke at 420°C with 12% oxygen) can be increased up to 600°C by carrying out a post-combustion by supplying additional oxygen.

Recirculation of pyrolysis gas at 600°C presents the advantage of allowing the pyrolysis operation to be maintained autothermally without need for an external source of heat, thereby enormously increasing the energy efficiency of the plant and enabling the process to be self-sufficient from the energy point of view.

In order to make the maximum use of the heat from the cogeneration equipment, a system has been provided to recover the heat from the cooling circuits of the alternating motors of the cogeneration equipment and from the combustion smoke of said motors, or from the condensates of the combined-cycle steam turbine. It is possible thereby to obtain, for example, hot water to be employed in the absorption cooling equipment that cools the pyrolysis gases upon outlet from the reactor.

Both the thermal energy and the electrical energy generated with the cogeneration equipment can also be used to meet the thermal needs of parallel processes of treatment of wastes or products, thereby increasing still further the energy efficiency of the process, as well as its economic viability. In the embodiment described, part of the thermal energy from the cogeneration is used to obtain drinking water by means of a system of desalinisation of salty water by multistage thermal evaporation using hot water obtained from the exhaust gases from the alternating motors of the cogeneration equipment.

The process described also makes provision for recovery and concentration of the carbon dioxide of the combustion smokes from the cogeneration equipment, by means of a system of chemical absorption and extraction that preferably uses a 30% solution of monoethanolamine as absorbent. The outlet gas of the system is cooled and compressed until the carbon dioxide is liquefied, in order subsequently to store it in tanks. The purity of the gas obtained exceeds 99.8% carbon dioxide.

Surprisingly, the process of the present invention constitutes an integral process for the treatment of tyres that fully recovers the carbon black and that, in addition to electrical energy, permits other products such as drinking water and liquid carbon dioxide to be produced.

The treatment process is also very economically viable, for it can be used to treat a large quantity of tyres with the utmost energy and material efficiency, so that it constitutes a real alternative to consigning tyres to landfill sites.

By way of example, said process can be used to treat up to 63,000 t/year of tyres, from which the following products and energy can be obtained:
Carbon black: 14,742 t/year
Electrical energy: 14,490,000 kWh/year
Drinking water: 110,250 m³/year
Carbon dioxide: 4,057 t/year

## Claims

1. Process for the treatment of tyres, which includes the stage of carrying out pyrolysis of the rubber and carbon black waste that said tyres contain, and the stage of recovering said carbon black from the pyrolysis of the waste, **characterised in that** said pyrolysis is carried out in the presence of a cracking catalyst and under conditions suitable to permit total conversion to gas, in reactor conditions, of the rubber that said waste includes, and **in that** it further includes the stage of recovering said gas for use as energy and/or materials.

2. Process according to claim 1, **characterised in that** said pyrolysis is carried out by means of a reactor (1) that includes the gas-solid contact system named spouted bed.

3. Process according to either of the preceding claims, **characterised in that** said cracking catalyst is selected for obtaining hydrocarbons, and **in that** said energy use includes the stage of generating electrical energy by means of cogeneration equipment substantially fed from hydrocarbons from said gas.

4. Process according to claim 3, **characterised in that** said hydrocarbons have a molecular size such that the molecules have fewer than 25 atoms of carbon.

5. Process according to either of claims 3 and 4, **characterised in that** it includes the stage of recovering the carbon dioxide from the combustion gases of said cogeneration equipment.

6. Process according to any of claims 3 to 5,
**characterised in that** it includes the stage of recirculating part of said gas for fluidising the bed and for providing heat, with the temperature of said recirculated gas being maintained by thermal energy from post-combustion of the exhaust gases from said cogeneration equipment.

7. Process according to any of claims 3 to 6, **characterised in that** it includes the stage of cooling the gas generated under reactor conditions (1) in order to obtain hydrocarbons, and **in that** said cooling is carried out by means of absorption cooling equipment that uses thermal energy from the cogeneration equipment.

8. Process according to any of the preceding claims, **characterised in that** before the stage of pyrolysis, the stage of separating the textile and metallic fibres weave from the tyres is carried out.

9. Process according to any of claims 3 to 8, **characterised in that** it includes the stage of using thermal energy from the said cogeneration equipment in order to meet the thermal needs of at least one parallel process of treatment of wastes or products.

10. Process according to claim 9, **characterised in that** said parallel process includes the stage of desalinising brine by means of a system of desalinisation by thermal evaporation.

11. Pyrolysis reactor for carrying out the process according to any of claims 2 to 10, **characterised in that** it includes means (3) for collecting the carbon black from pyrolysis of said waste, and **in that** it includes the contact system known as the spouted-bed system, which allows said carbon black to be separated from the bed without need to remove the catalyst.

12. Reactor according to claim 11, **characterised in that** the wall (4,5) of said reactor includes said means (3) for collecting the carbon black.

13. Reactor according to either of claims 11 or 12, **characterised in that** it includes a wall with an inverted-cone configuration (4), with the lower part of said wall including the inlet (6) of gas for moving the bed.

14. Reactor according to claim 13, **characterised in that** said wall of trunco-conical configuration includes a cylindrical upper prolongation (5).

15. Reactor according to any of claims 11 to 14, **characterised in that** said means (3) for collecting the carbon black include means for allowing continuous outlet of the separated carbon black.

16. Reactor according to any of claims 11 to 15, **characterised in that** it includes means (12) for hot filtering the gases generated in reactor conditions.
